(19) Europäisches Patentamt
European Patent Office
Office européen des brevets

(11) EP 0 618 919 B1

(12) EUROPÄISCHE PATENTSCHRIFT

(45) Veröffentlichungstag und Bekanntmachung des Hinweises auf die Patenterteilung:
**28.02.1996 Patentblatt 1996/09**

(21) Anmeldenummer: **93901697.8**

(22) Anmeldetag: **17.12.1992**

(51) Int Cl.[6]: **C07F 7/08**

(86) Internationale Anmeldenummer:
**PCT/EP92/02932**

(87) Internationale Veröffentlichungsnummer:
**WO 93/13110 (08.07.1993 Gazette 1993/16)**

(54) **JODONIUMSALZE UND VERFAHREN ZU DEREN HERSTELLUNG**

IODINIUM SALTS AND METHOD OF PREPARING THEM

SELS D'IODONIUM ET LEUR PROCEDE DE FABRICATION

(84) Benannte Vertragsstaaten:
**AT BE CH DE ES FR GB IT LI LU NL**

(30) Priorität: **20.12.1991 DE 4142327**

(43) Veröffentlichungstag der Anmeldung:
**12.10.1994 Patentblatt 1994/41**

(73) Patentinhaber: **Wacker-Chemie GmbH**
**D-81737 München (DE)**

(72) Erfinder:
- **HERZIG, Christian**
**D-8221 Taching am See (DE)**
- **SCHEIDING, Silke**
**D-8269 Burgkirchen (DE)**

(56) Entgegenhaltungen:
**EP-A- 0 136 679** **EP-A- 0 334 056**
**US-A- 4 513 137**

- **THE JOURNAL OF ORGANIC CHEMISTRY Bd. 45, Nr. 8, 1980, Seiten 1543 - 1544 KOSER, G.F. ET AL.**
- **TETRAHEDRON Bd. 44, Nr. 13, 1988, Seiten 4095 - 4012 OCHIAI, M. ET AL.**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 618 919 B1

Printed by Jouve, 75001 PARIS (FR)

## Beschreibung

Die Erfindung betrifft neue Jodoniumsalze und ein Verfahren zu deren Herstellung.

Photoaktive Diaryljodoniumsalze sind aus US-A, 4,264,703, US-A 4,279,717, US-A 4,399,071, US-A 4,617,238 und EP-A 334 056 bekannt und werden als Photoinitiatoren zur Polymerisation von kationisch polymerisierbaren organischen Substanzen, z.B. Epoxiden, Vinylethern, Epoxygruppen enthaltenden Organopolysiloxanen, Vinyloxygruppen enthaltenden Organopolysiloxanen und Olefinen, verwendet. Die kationisch polymerisierbaren Substanzen sind aber unpolar bis wenig polar, besonders wenn die polymerisierbaren Gruppen in Organopolysiloxanen enthalten sind. In EP-A 334 056 (offengelegt am 27. September 1989, J.V. Crivello et al., General Electric Company) sind Diaryljodoniumsalze beschrieben, wobei jeweils ein Arylrest durch eine langkettige Alkoxygruppe substituiert ist.

In der US-A 4,513,137 werden Jodoniumsalze beschrieben, die selbst in polaren Lösungsmitteln, wie Aceton, Ether, Alkohol/Wasser nicht löslich sind und antibiotische Eigenschaften besitzen.

Es bestand die Aufgabe photoaktive Jodoniumsalze bereitzustellen, die als Photoinitiatoren zur Polymerisation von kationisch polymerisierbaren organischen Substanzen eingesetzt werden können und die in diesen Substanzen löslich sind. Die Aufgabe wird durch die Erfindung gelöst.

Gegenstand der Erfindung sind Jodoniumsalze der allgemeinen Formel

$$A\text{-}J^{+}\text{-}B\ X^{-}$$

wobei A einen Rest der allgemeinen Formel

$$\begin{array}{c} E_b \\ | \\ -C-D_a \\ | \\ F_c \end{array}$$

bedeutet, worin

C einen einwertigen aromatischen Kohlenwasserstoffrest mit 6 bis 14 Kohlenstoffatomen je Rest oder einen einwertigen mindestens ein Sauerstoff- und/oder Schwefelatom enthaltenden aromatischen Kohlenwasserstoffrest mit 5 bis 14 Ringatomen je Rest bedeutet,

D, E und F jeweils Substituenten von C bedeuten, wobei

D einen Rest der Formel

$$-(O)_x-(R)_y-SiR^1_3 ,$$

E einen Rest der Formel

$$-OR^2 ,$$

F einen Rest der Formel

$$-R^3 ,$$

a 1, 2 oder 3,

b 0, 1 oder 2,

c 0, 1 oder 2,

x 0 oder 1,

y 0 oder 1, mit der Maßgabe, daß die Summe aus x + y = 1 oder 2 ist,

R einen zweiwertigen aliphatischen Kohlenwasserstoffrest mit 1 bis 18 Kohlenstoffatomen je Rest, der gegebenenfalls durch mindestens ein Sauerstoffatom und/oder ein Schwefelatom und/ oder eine Carboxylgruppe unterbrochen ist,

$R^1$ einen einwertigen Kohlenwasserstoffrest mit 1 bis 18 Kohlenstoffatomen je Rest, der gegebenenfalls durch mindestens ein Sauerstoffatom unterbrochen ist,

$R^2$ einen einwertigen Kohlenwasserstoffrest mit 1 bis 18 Kohlenstoffatomen je Rest, der gegebenenfalls durch mindestens ein Sauerstoffatom unterbrochen ist, und

$R^3$ einen einwertigen Kohlenwasserstoffrest mit bis 10 Kohlenstoffatomen je Rest, der gegebenenfalls durch mindestens ein Sauerstoffatom und/oder ein Schwefelatom unterbrochen ist, bedeutet,

B einen Rest der Formel

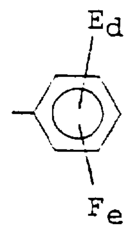

bedeutet, wobei E und F jeweils einen in 2-, 3-, 4-, 5- oder 6-Position an den Benzolring gebundenen Rest bedeutet, und die Reste E und F die oben dafür angegebene Bedeutung haben,

d 0, 1 oder 2

e 0, 1 oder 2 und

$X^-$ ein Tosylatanion oder ein schwach nukleophiles oder nicht nukleophiles Anion $Y^-$ ausgewählt aus der Gruppe von $CF_3CO_2^-$, $BF_4^-$, $PF_6^-$, $AsF_6^-$, $SbF_6^-$, $ClO_4^-$, $HSO_4^-$ und $CF_3SO_3^-$ bedeutet.

Beispiele für aromatische Kohlenwasserstoffreste C sind der Phenyl-, Naphthyl- und Anthrylrest.

Beispiele für mindestens ein Sauerstoff- und/oder Schwefelatom enthaltende aromatische Kohlenwasserstoffreste C sind der 2-Furyl-, 3-Furyl-, 2-Thienyl- und 3-Thienylrest.

Vorzugsweise ist der Rest A ein Rest der Formel

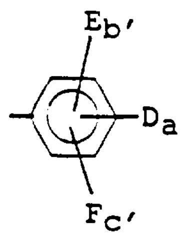

wobei D, E und F jeweils einen in 2-, 3-, 4-, 5- oder 6-Position an den Benzolring gebundenen Rest bedeuten,

D, E und F die oben dafür angegebene Bedeutung haben und

b' 0 oder 1 und

c' 0 oder 1 bedeutet.

Beispiele für den zweiwertigen Kohlenwasserstoffrest R sind $-CH_2-$, $-(CH_2)_2-$, $-(CH_2)_3-$, $-(CH_2)_4-$ und $-(CH_2)_6-$.

Beispiele für den zweiwertigen Kohlenwasserstoffrest R, der durch mindestens ein Sauerstoffatom und/oder Schwefelatom und/oder eine Carboxylgruppe unterbrochen ist, sind $-CH_2CH_2OCH_2CH_2-$, $-CH_2CH_2OCH_2CH_2CH_2-$ und $-CH_2CH_2OCH_2CH_2OCH_2CH_2CH_2-$.

Beispiele für Kohlenwasserstoffreste $R^1$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest und Octadecylreste, wie der n-Octadecylrest.

Beispiele für durch mindestens ein Sauerstoffatom unterbrochene Kohlenwasserstoffreste $R^1$ sind Alkoxyalkylreste, wie $-CH_2CH_2OCH_3$, $-CH_2CH_2OCH_2CH_3$ und $-CH_2CH_2OCH_2CH_2CH_2CH_3$.

Vorzugsweise enthalten alle drei am Si-Atom gebundenen Reste $R^1$ zusammen 3 bis 25 aliphatische Kohlenstoffatome, bevorzugt 10 bis 20 aliphatische Kohlenstoffatome.

Die Beispiele für Reste $R^1$ gelten in vollem Umfang für die Reste $R^2$.

Beispiele für Kohlenwasserstoffreste $R^3$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest und Decylreste, wie der n-Decylrest; Arylreste, wie der Phenylrest.

Beispiele für durch mindestens ein Sauerstoffatom und/oder Schwefelatom unterbrochene Kohlenwasserstoffreste $R^3$ sind $-CH_2CH_2OCH_3$, $-CH_2CH_2OCH_2CH_3$ und $-CH_2CH_2SCH_2CH_3$.

Beispiele für Reste D sind

- $O(CH_2)_3SiMe_2Et$
- $O(CH_2)_3SiMeBu_2$
- $O(CH_2)_3SiMeOct_2$

- $O(CH_2)_3SiBu_3$
- $O(CH_2)_2O(CH_2)_3SiMe_2Oct$
- $O(CH_2)_2O(CH_2)_3SiMeOct_2$
- $O(CH_2)_2O(CH_2)_3SiBu_3$
- $(CH_2)_3SiMeOct_2$
- $O(CH_2)_3SiEt_3$
- $(CH_2)_3SiMe_2Oct$

(worin Me Methylrest, Et Ethylrest, Bu n-Butylrest und Oct n-Octylrest bedeutet), wobei der Rest

- $O(CH_2)_2O(CH_2)_3SiMeOct_2$

bevorzugt ist.

Beispiele für Reste E sind der Methoxyrest, Ethoxyrest und n-Butoxyrest.

Beispiele für Reste F sind der Methyl-, Ethyl-, Propyl-, 2-Methylpropyl- und der n-Butylrest.

Beispiele für Reste A sind

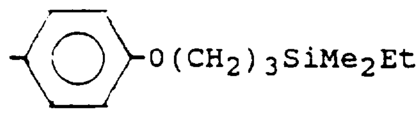

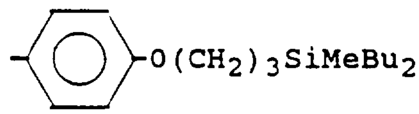

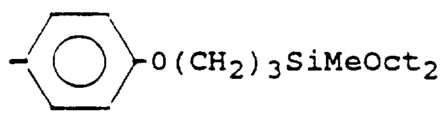

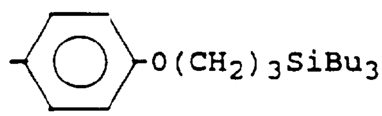

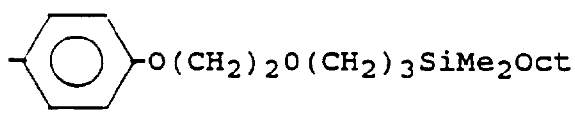

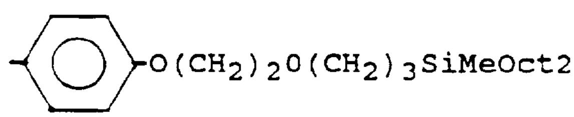

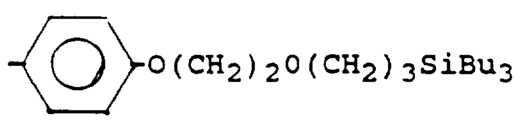

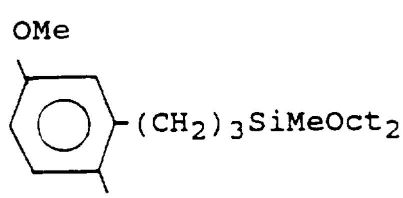

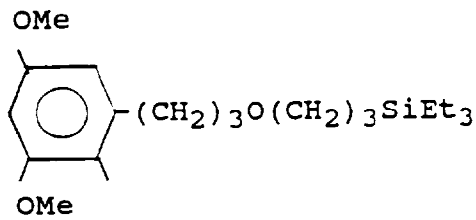

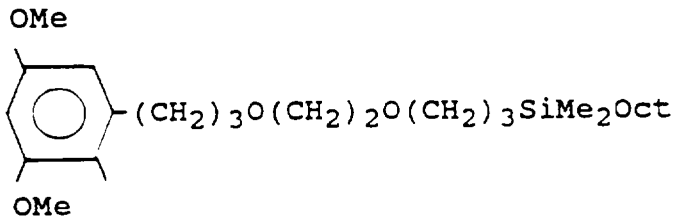

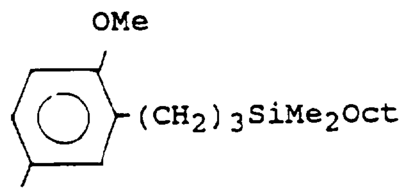

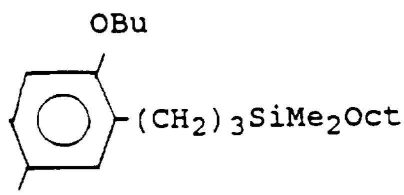

(worin Me Methylrest, Et Ethylrest, Bu n-Butylrest und Oct n-Octylrest bedeutet).

Beispiele für Reste B sind der Phenyl-, 4-Methylphenyl-, 3-Methoxyphenyl- und 4-Methoxyphenylrest.

Bevorzugte Beispiele für Anionen $Y^-$ sind $PF_6^-$, $AsF_6^-$ und $SbF_6^-$, wobei $SbF_6^-$ besonders bevorzugt ist.

Bevorzugt sind als Jodoniumsalze solche der Formel

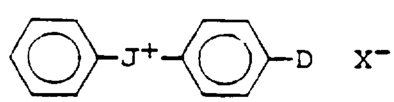

wobei D und X die oben dafür angegebene Bedeutung haben.

Besonders bevorzugt ist das Jodoniumsalz der Formel

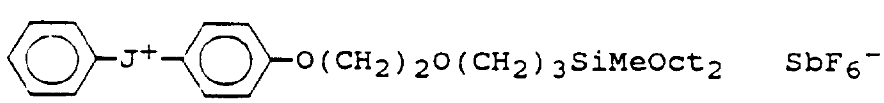 .

Die Löslichkeit der erfindungsgemäßen Jodoniumsalze ist in unpolaren Medien, wie n-Alkanen, wesentlich größer als die der vergleichbaren (gleiche Anzahl der Kohlenstoffatome im Substituenten des Phenylrestes) Jodoniumsalze gemäß der eingangs erwähnten EP-A 334 056.

Beispielsweise ist das Jodoniumsalz der Formel

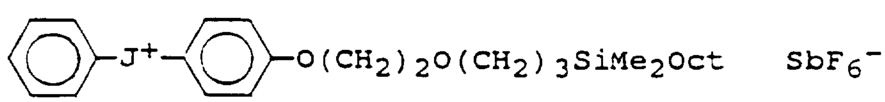 ,

das 15 Kohlenstoffatome im Rest D enthält, unbegrenzt in Cyclohexan löslich, ein Jodoniumsalz mit 20 Kohlenstoffatomen im Rest D unbegrenzt in n-Heptan löslich.

Gegenstand der Erfindung ist weiterhin ein Verfahren zur Herstellung der Jodoniumsalze, dadurch gekennzeichnet, daß in einer 1. Stufe
ein Silan der Formel

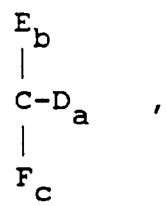

wobei C, D, E, F, a, b und c die oben dafür angegebene Bedeutung haben, mit gegebenenfalls am Benzolring substituiertem [Hydroxy-(tosyloxy)-jod]-benzol der Formel

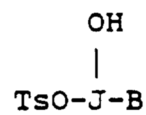

wobei Ts0 einen Tosyloxyrest und B die oben dafür angegebene Bedeutung hat, in Gegenwart von Säuren und gegebenenfalls polarem Lösungsmittel zu einem Jodoniumtosylat der Formel

$$A\text{-}J^{+}\text{-}B\ TsO^{-}$$

umgesetzt wird, wobei $TsO^{-}$ ein Tosylatanion und A einen Rest der Formel

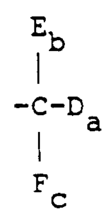

bedeutet und B, C, D, E, F, a, b und c die oben dafür angegebene Bedeutung haben, und gegebenenfalls in einer 2. Stufe das so erhaltene Jodoniumtosylat mit einem Alkalimetallsalz der Formel

$$M^{+}Y^{-},$$

wobei $M^{+}$ ein Alkalikation und $Y^{-}$ ein schwach nukleophiles oder nicht nukleophiles Anion ausgewählt aus der Gruppe von $CF_3CO_2^{-}$, $BF_4^{-}$, $PF_6^{-}$, $AsF_6^{-}$, $SbF_6^{-}$, $ClO_4^{-}$, $HSO_4^{-}$ und $CF_3SO_3^{-}$ bedeutet, in Gegenwart von organischem Lösungsmittel umgesetzt wird.

Beispiele für bei dem erfindungsgemäßen Verfahren eingesetzte Silane sind

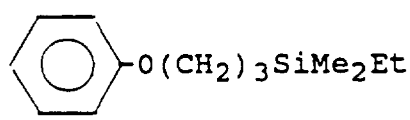

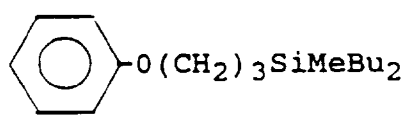

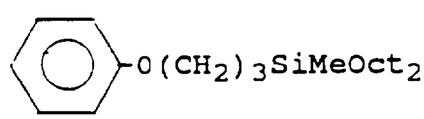

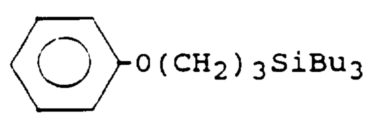

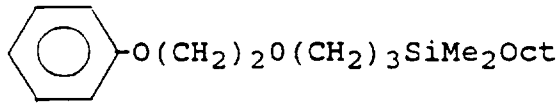

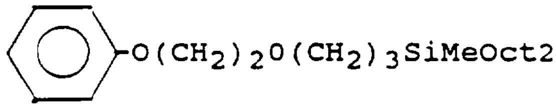

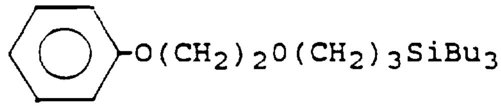

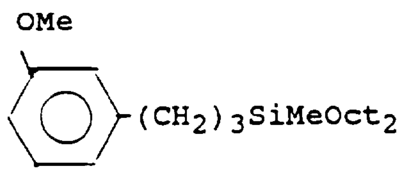

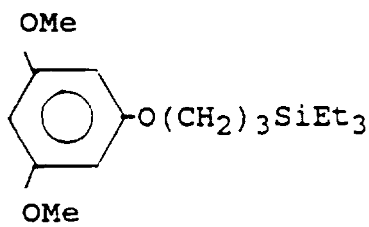

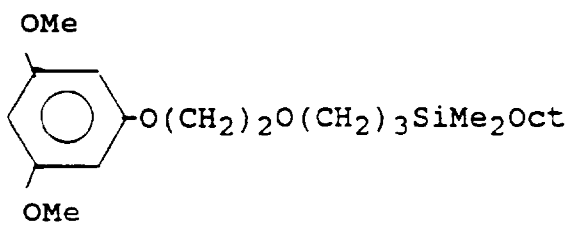

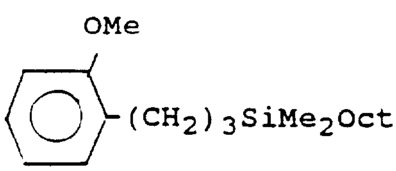

und

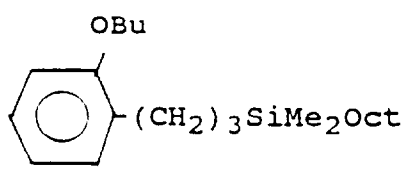

(worin Me Methylrest, Et Ethylrest, Bu n-Butylrest und Oct n-Octylrest bedeutet).

Die Silane werden mit gegebenenfalls am Benzolring substituiertem [Hydroxy-(tosyloxy)-jod]-benzol ("Koser's Reagenz") nach dem Verfahren von Neiland und Karele, Journal of Organic Chemistry, U.S.S.R. 6, 889 (1970) unter Säurekatalyse und vorzugsweise in polarem Lösungsmittel bei einer Temperatur von vorzugsweise 20 bis 60°C und vorzugsweise beim Druck der umgebenden Atmosphäre umgesetzt.

Beispiele für Säuren sind Carbonsäuren, wie Ameisensäure, Eisessig und Propionsäure, wobei Eisessig bevorzugt ist.

Säure wird in Mengen von vorzugsweise 1 bis 200 Gewichtsteilen je 100 Gewichtsteile Silan eingesetzt.

Beispiele für polare Lösungsmittel sind Acetonitril, Dimethylformamid, Methylenchlorid, 1,1,1-Trichlorethan und Trichlorethylen, wobei letzteres bevorzugt ist.

Polares Lösungsmittel wird in Mengen von vorzugsweise 50 bis 500 Gewichtsteilen je 100 Gewichtsteile Silan eingesetzt.

Die Herstellung von [Hydroxy-(tosyloxy)-jod]-benzol ist bei Neiland und Karele, Journal of Organic Chemistry, U.S.S.R. 6, 889 (1970) und im Beispiel 1 der eingangs erwähnten EP-A 334 056 beschrieben.

Die bei dem erfindungsgemäßen Verfahren eingesetzten Silane, wie Tetraalkylsilane, sind nach bekannten Verfahren herstellbar. Sie können beispielsweise folgendermaßen hergestellt werden:

Phenylallylether, erhältlich nach der in DE-A 39 35 775 beschriebenen Methode, wird an Hydrogenchlorsilanen in Gegenwart von Hydrosilylierungskatalysatoren, wie Platinkatalysatoren, addiert und die so erhaltenen Phenoxyalkylchlorsilane werden mit metallorganischen Reagenzien, wie Alkyllithium oder Alkylgrignardverbindungen alkyliert. Zur vollständigen Alkylierung ist dabei ein Überschuß (10 bis 50 Mol%) an Alkylmetallreagenz bezogen auf die Si-gebundenen Chloratome nötig. Werden nicht alle Si-gebundenen Chloratome gegen Si-gebundene Alkylgruppen ausgetauscht, führt dies bei der Aufarbeitung der Tetraalkylsilane zu unerwünschten Nebenreaktionen, wie Entstehung von Silanolen oder Disiloxanbildung.

Die bevorzugt eingesetzten längerkettigen Silane, d.h. solche mit mindestens 15 aliphatischen Kohlenstoffatomen, sind undestillierbare, meist dünnflüssige Öle. Sie sind chemisch weitgehend inert, besitzen aufgrund der Phenyloxygruppe aber eine sehr gute Reaktivität gegenüber Elektrophilen, wie dem Jodkation im [Hydroxy-(tosyloxy)-jod]-benzol.

Die Reaktionszeit bei der 1. Stufe des erfindungsgemäßen Verfahrens beträgt vorzugsweise 2 bis 4 Stunden.

[Hydroxy-(tosyloxy)-jod]-benzol wird vorzugsweise mindestens in stöchiometrischen Mengen bezogen auf das eingesetze Silan, bevorzugt in Mengen von 1,1 bis 1,4 Mol je Mol eingesetztes Silan, eingesetzt.

Wird bei dem erfindungsgemäßen Verfahren [Hydroxy-(tosyloxy)-jod]-benzol im Überschuß (ca. 20 Mol%) eingesetzt, werden Umsätze bis zu 97 %, in Einzelfällen auch über 97 %, jeweils bezogen auf das eingesetzte Silan, erzielt.

Die in der 1. Stufe erhaltenen Jodoniumtosylate sind meist gelbe bis hellorange hochviskose Flüssigkeiten, die sich in den meisten organischen Lösungsmitteln sehr leicht lösen.

Das Tosylatanion der Jodoniumtosylate kann in einer 2. Verfahrensstufe gegen ein Anion einer starken Säure ausgetauscht werden.

Beispiele für $M^+$ sind $Na^+$, $K^+$ und $Li^+$.

Bevorzugte Beispiele für Alkalimetallsalze $M^+Y^-$ sind $NaPF_6$, $NaAsF_6$ und $NaSbF_6$, wobei $NaSbF_6$ besonders bevorzugt ist.

Das Alkalimetallsalz wird vorzugsweise in Mengen von 1,1 bis 1,5, bevorzugt 1,1 bis 1,2 Mol, je Mol des in der 1. Stufe des erfindungsgemäßen Verfahrens erhaltenen Jodoniumtosylats eingesetzt.

Der Anionenaustausch erfolgt vorzugsweise in Gegenwart eines organischen Lösungsmittels. Bevorzugt wird als organisches Lösungsmittel solches verwendet, in dem das Jodoniumtosylat und das Alkalimetallsalz $M^+Y^-$ gut löslich, das Alkalimetalltosylat aber schwer löslich ist. Beispiele für organische Lösungsmittel sind Ketone, wie Aceton, Methylethylketon, Methylisobutylketon und Ester, wie Ethylacetat, Butylacetat und Ethylbutyrat.

Die gegebenenfalls in der 2. Stufe durchgeführte Umsetzung erfolgt vorzugsweise durch Mischen von Lösungen des Jodoniumtosylats und des Alkalimetallsalzes $M^+Y^-$ in organischem Lösungsmittel. Das Mischen erfolgt vorzugsweise bei Raumtemperatur und dem Druck der umgebenden Atmosphäre. Es können aber auch höhere oder niedrigere Temperaturen verwendet werden.

Das bei der Umsalzung entstehende Alkalimetalltosylat, wie Natriumtosylat, fällt nach dem Mischen aus und kann abfiltriert werden.

Wird das Alkalimetallsalz, wie Natriumhexafluoroantimonat, in leichtem Überschuß eingesetzt, wird mehr als 95 % Anionenaustausch erreicht. Es wird eine weitgehend saubere Jodoniumhexafluoroantimonatlösung erhalten. Noch enthaltene anorganische Salze werden durch Eindampfen der Lösung und erneutes Lösen des Öls in organischem Lösungsmittel, vorzugsweise wenig polares organisches Lösungsmittel, wie Toluol, Cyclohexan oder n-Alkane, entfernt. Durch erneute Filtration werden saubere Lösungen der Jodoniumsalze erhalten. Das organische Lösungsmittel kann entfernt werden oder die reinen Jodoniumsalze können zur besseren Handhabung vorzugsweise in 30 bis 60 %iger Lösung belassen werden.

Das erfindungsgemäße Verfahren kann absatzweise, halbkontinuierlich oder vollkontinuierlich durchgeführt werden.

Die Jodoniumsalze sind lichtempfindlich und zersetzen sich z.B. bei Bestrahlung mit Ultraviolettlicht nach einem mehrstufigen Mechanismus, der im Buch "UV-Curing: Science & Technology" von P. Pappas auf Seite 34 beschrieben ist. Als aktives Endprodukt dieser Photolyse wird die entstandene Brönstedsäure, z.B. $HPF_5$, $HAsF_5$ oder $HSbH_5$, angesehen, die ihrerseits die Polymerisation von kationisch polymerisierbaren Substanzen, wie Epoxiden oder Vinylethern, startet.

Die erfindungsgemäßen Jodoniumsalze eignen sich als Photoinitiatoren für die Polymerisation von kationisch polymerisierbaren organischen Substanzen, wie Epoxiden, Vinylethern, Epoxygruppen enthaltenden Organopolysiloxanen, Alkenyloxygruppen, wie Vinyloxygruppen oder Propenyloxygruppen, enthaltenden Organopolysiloxanen und Olefinen. Solche Substanzen sind beispielsweise in US-A 5,057,549, DE-A 40 02 922 sowie in den eingangs genannten Patentschriften beschrieben.

**Beispiel 1:**

a) Zu 88,5 g (0,66 Mol) Allylphenylether werden unter Stickstoffatmosphäre 4 mg Platin in Form von Hexachloroplatinsäure zugegeben und die Mischung wird auf 80°C erwärmt. Zu der Mischung werden innerhalb von zwei Stunden 125 g Dimethylchlorsilan zudosiert, wobei die Sumpftemperatur unter 50°C fällt. Unter leichtem Rückfluß wird die Mischung weitere sechs Stunden gerührt. Nach fraktionierter Destillation werden insgesamt 112 g 3-Phenoxypropyldimethylchlorsilan erhalten. Das Produkt hat eine Säurezahl von 248 (theoretisch 244).

b) Unter Schutzgasatmosphäre werden 0,5 Mol einer Ethylgrignardlösung in Diethylether vorgelegt. Bei Raumtemperatur werden 92 g (0,40 Mol) des Chlorsilans, dessen Herstellung oben unter a) beschrieben ist, zudosiert. Die Mischung wird dann zum Sieden erwärmt und weitere zwei Stunden bei 40°C gerührt. Die Magnesiumsalze werden dann durch Zugabe von verdünnter Salzsäure aufgelöst. Nach Phasentrennung wird die Etherphase zweimal mit je 300 ml Wasser gewaschen, bei leichtem Vakuum eingeengt und das Silan bei 3 hPa (abs.) überdestilliert. Es werden 85 g einer farblosen leicht beweglichen Flüssigkeit, die gemäß dem $^1$H-NMR-Spektrum reines 3-Phenoxypropyldimethylethylsilan ist, erhalten. Die Jodzahl (= Zahl, die angibt, wieviel g Jod von 100 g Substanz gebunden werden) beträgt 115,2 (theoretisch 114,4).

c) 11,1 g (0,05 Mol) des Tetraalkylsilans, dessen Herstellung oben unter b) beschrieben ist, werden mit 10 g Acetonitril, 3 g Eisessig und 25 g [Hydroxy-(tosyloxy)-jod]-benzol vermischt und das Gemisch wird zwei Stunden bei 40°C gerührt. Das [Hydroxy-(tosyloxy)-jod]-benzol löst sich dabei völlig auf. Das Gemisch wird mit 150 ml Wasser gewaschen und bei 30°C und 3 hPa (abs.) einkonzentriert. Die ca. 30 g Rohprodukt werden aus einem Gemisch von 50 ml Toluol und 70 ml n-Heptan umkristallisiert. Nach Trocknung werden 22,8 g [4-(3-Dimethylethylsilylpropyloxy)phenyl]phenyljodoniumtosylat mit einem Schmelzpunkt von 128°C erhalten.

Die Löslichkeit des Jodoniumtosylats in Toluol wird untersucht. Die Ergebnisse sind in Tabelle 1 zusammengefaßt.

d) Zum Anionenaustausch $TsO^-$ gegen $SbF_6^-$ werden 12,0 g des Jodoniumtosylats, dessen Herstellung oben unter c) beschrieben ist, in 20 ml Aceton gelöst und unter gutem Rühren wird eine Lösung von 6,0 g Natriumhexafluoroantimonat in 30 ml Aceton zugegeben. Es wird eine weitere Stunde gerührt und der Niederschlag aus Natriumtosylat wird abfiltriert. Nach Abdampfen des Acetons bei 40°C im Vakuum wird das Rohprodukt in Toluol aufgenommen und es werden die restlichen Natriumsalze abfiltriert. Alle Lösungsmittelreste werden im Vakuum entfernt und als Rückstand werden 11,8 g eines gelblichen Öls erhalten, Nach Zusatz von Cyclohexan wird das Öl umkristallisiert und nach dem Waschen mit Cyclohexan und Trocknen im Vakuum wird ein weißes Kristallpulver mit einem Schmelzpunkt von 64 - 66°C erhalten.

Die Löslichkeit des Jodoniumhexafluoroantimonats in Toluol wird untersucht. Die Ergebnisse sind in Tabelle 1 zusammengefaßt.

**Vergleichsversuch 1:**

a) (4-Octyloxyphenyl)phenyljodoniumtosylat wird, wie in Beispiel 1 der eingangs erwähnten EP-A 334 056 beschrieben, hergestellt. Die Löslichkeit dieses Jodoniumtosylats in Toluol wird mit der des erfindungsgemäßen JodoniumtosyLats von Beispiel 1 c) (wobei die Atomzahl beider Verbindungen gleich ist) verglichen. Die Ergebnisse sind in Tabelle 1 zusammengefaßt.

b) (4-Octyloxyphenyl)phenyljodoniumhexafluoroantimonat wird, wie in Beispiel 1 der eingangs erwähnten EF-A 334 056 beschrieben, hergestellt. Die Löslichkeit dieses Jodoniumhexafluoroantimonats in Toluol wird mit der des erfindungsgemäßen. Jodoniumhexafluoroantimonat von Beipiel 1 d) (wobei die Atomzahl beider Verbindungen gleich ist) verglichen. Die Ergebnisse sind in Tabelle 1 zusammengefaßt.

Tabelle 1 :

| Beispiel bzw. Vergleichsversuch | g Jodoniumsalz/100 g Toluol |
|---|---|
| B) 1c) $TsO^-$ | 1,9 |
| B 1d) $SbF_6^-$ | > 100 |
| V 1a) $TsO^-$ | 0,45 |
| V 1b) $SbF_6^-$ | 20 |

Der Löslichkeitsunterschied zwischen den erfindungsgemäßen Jodoniumsalzen und denen gemäß EP-A 334 056 ist beträchtlich. Da die Jodoniumsalze gemäß EP-A 334 056 in n-Alkanen fast unlöslich sind, wurde die Löslichkeit in Toluol angegeben.

**Beispiel 2:**

a) 690 g 2-Phenoxyethanol werden zusammen mit 470 g Allylchlorid zu einer Lösung von 600 g Natriumhydroxid und 14 g Trimethylbenzylammoniumchlorid in 600 ml Wasser gegeben. Das Gemisch wird unter Rückfluß erwärmt und solange stark gerührt bis die Gasraumtemperatur ca. 90°C erreicht hat. Nach dem Abkühlen des Gemisches werden 1,1 1 Wasser zugefügt und die wäßrige Phase wird nach vollständiger Auflösung der Salze abgetrennt. Es wird dann noch zweimal mit je 300 ml 10 %iger Natriumchloridlösung nachgewaschen. Die organische Phase wird bei 8 hPa (abs.) fraktioniert destilliert und bei 73 - 76°C werden 877 g (98,5 % d.Th.) reiner 2-Allyloxyethylphenylether gewonnen.

b) Unter Stickstoffatmosphäre werden zu 178 g (1,0 Mol) 2-Allyloxyethylphenylether, dessen Herstellung oben unter a) beschrieben ist, 8 mg Hexachloroplatinsäure zugegeben und die Mischung wird auf 70°C erwärmt. Zu der Mischung wird innerhalb von zwei Stunden 169 g (1,25 Mol) Trichlorsilan zugetropft und die Mischung wird bei 70°C weitere zwei Stunden gerührt. Das Rohprodukt wird destillativ im Vakuum gereinigt. Es werden 250 g 3-(2-Phenoxyethoxy)propyltrichlorsilan mit einer Säurezahl von 531 erhalten.

c) Das Chlorsilan, dessen Herstellung oben unter b) beschrieben ist, wird alkyliert, indem unter Argonatmosphäre 800 ml einer 1,7-molaren n-Butylgrignardlösung (36 % Überschuß) in Diethylether vorgelegt wird und 105 g des Chlorsilans zugetropft werden. Die Mischung wird weitere fünf Stunden bei Rückflußtemperatur gerührt und die Magnesiumsalze werden durch Zugabe von verdünnter Salzsäure aufgelöst. Nach Abtrennen der klaren Etherphase wird diese zweimal mit je 300 ml Wasser gewaschen und im Vakuum bei 80°C einkonzentriert. Es werden 122 g 3-(2-Phenoxyethoxy)propyltributylsilan erhalten. Dem $^1H$-NMR-Spektrum ist zu entnehmen, daß das Silan pro Phenoxygruppe genau 3,0 n-Butylgruppen direkt an das Si-Atom gebunden enthält.

d) 38 g (0,10 Mol) des Tetraalkylsilans, dessen Herstellung oben unter c) beschrieben ist, werden mit 49 g (0,125 Mol) [Hydroxy-(tosyloxy)-jod]-benzol vermischt und zu der Mischung werden 30 g Trichlorethan und 30 g Eisessig zugegeben. Nach drei Stunden bei 40°C ist die Mischung fast klar und orangegelb gefärbt. Die Mischung wird mit weiteren 150 ml Trichlorethan verdünnt und zunächst mit 300 ml Wasser, dann zweimal mit je 200 ml Wasser, gewaschen. Nach Abtrennung der Wasserphase wird die Jodoniumsalzlösung bei 40°C und 5 hPa (abs.) eingeengt und es werden 73 g [4-[2-(3-Tributylsilylpropyloxy)ethoxy]phenyl]phenyljodoniumtosylat als orangerote pastöse Masse, die gemäß dem $^1H$-NMR-Spektrum kein Ausgangsilan mehr enthält, erhalten.

e) 38 g (0,05 Mol) des Jodoniumtosylats, dessen Herstellung oben unter d) beschrieben ist, werden in 80 ml Aceton gelöst und bei Raumtemperatur wird eine Lösung von 16 g (0,06 Mol) Natriumhexafluoroantimonat in 70 ml Aceton zugegeben. Es wird eine weitere Stunde gerührt und der Niederschlag aus Natriumtosylat wird abfiltriert. Nach Abdampfen des Acetons bei 40°C im Vakuum wird das Rohprodukt in Toluol aufgenommen und es werden die restlichen Natriumsalze abfiltriert. Alle Lösungsmittelreste werden im Vakuum entfernt. Es werden 37 g [4-[2-(3-Tributylsilylpropyloxy)ethoxy]phenyl]phenyljodoniumhexafluoroantimonat als hochviskoses Öl erhalten. Gemäß dem $^1H$-NMR-Spektrum ist der Anionenaustausch vollständig (Nachweisgrenze des Tosylats ca. 2 Mol%).

**Beispiel 3:**

a) Es werden 3 mg Platin in Form eines Divinyltetramethyldisiloxanplatinkomplexes in 178 g (1,0 Mol) 2-Allyloxyethylphenylether, dessen Herstellung in Beispiel 2 unter a) beschrieben ist, aufgelöst und unter Stickstoffatmosphäre bei 60 bis 70°C innerhalb von vier Stunden 140 g (1,2 Mol) Methyldichlorsilan zugetropft. Nach weiteren zwei Stunden bei gleicher Temperatur wird überschüssiges Chlorsilan im Vakuum entfernt. Durch fraktionierte Destillation bei 9 hPa (abs.) werden bei 109 - 122°C 238 g 3-(2-Phenoxyethoxy)propylmethyldichlorsilan mit einer Säurezahl von 379 erhalten.

b) 149 g (0,5 Mol) des Chlorsilans, dessen Herstellung oben unter a) beschrieben ist, werden unter Schutzgasatmosphäre in eine siedende n-Octylgrignardlösung getropft, die zuvor aus 32 g Magnesiumspäne, 215 g 1-Chloroctan und 650 ml Tetrahydrofuran hergestellt wurde. Nach ca. 12 Stunden Rühren bei 70°C wird eine Mischung aus 125 g konzentrierter Salzsäure und 250 ml Wasser zugegeben. Die wäßrige Phase wird abgetrennt und das Tetrahydrofuran wird im Vakuum entfernt. Es werden 222 g 3-(2-Phenoxyethoxy)propylmethyldioctylsilan mit einer Jodzahl von 56,6 als gelbe Flüssigkeit erhalten. Gemäß dem $^1$H-NMR-Spektrum enthält das Silan 2,0 n-Octylgruppen je Phenoxygruppe. Die Säurezahl ist kleiner als 1 und die Ausbeute praktisch quantitativ.

c) 45 g (0,10 Mol) des Tetraalkylsilans, dessen Herstellung oben unter b) beschrieben ist, werden mit 49 g (0,125 Mol) [Hydroxy-(tosyloxy)-jod]-benzol vermischt und zu der Mischung werden 30 g Trichlorethan und 30 g Eisessig zugegeben. Es setzt eine leichte Erwärmung ein, worauf das Gemisch für weitere drei Stunden bei 40°C gerührt wird. Nach Zugabe von 100 ml Trichlorethylen wird dreimal mit je 300 ml Wasser gewaschen und die klare orangegelbe Lösung wird im Vakuum bei 40°C einkonzentriert. In nahezu quantitativer Ausbeute wird [4-[2-(3-Dioctylmethylsilylpropyloxy)ethoxy]phenyl]-phenyljodoniumtosylat, das gemäß dem $^1$H-NMR-Spektrum rein und frei von Ausgangsstoffen ist, als hochviskoses Öl erhalten.

d) 41 g (0,05 Mol) des Jodoniumtosylats, dessen Herstellung oben unter d) beschrieben ist, werden in 80 ml Aceton gelöst und bei Raumtemperatur wird eine Lösung von 16 g (0,06 Mol) Natriumhexafluoroantimonat in 70 ml Aceton zugegeben. Es wird eine weitere Stunde gerührt und der Niederschlag aus Natriumtosylat wird abfiltriert. Nach Abdampfen des Acetons bei 40°C im Vakuum wird das Rohprodukt in Toluol aufgenommen und es werden die restlichen Natriumsalze abfiltriert. Alle Lösungsmittelreste werden im Vakuum entfernt. Es werden 43 g [4-[2-(3-Dioctylmethylsilylpropyloxy)ethoxy]phenyl]-phenyljodoniumhexafluoroantimonat als oranges zähes Öl, dessen $^1$H-NMR-Spektrun den vollständigen Umsatz des Tosylats zeigt, erhalten.

**Beispiel 4:**

a) 148 g (1,0 Mol) 2-Allylanisol werden unter Stickstoffatmosphäre mit 8 mg Hexachloroplatinsäure vermischt und auf 70°C erwärmt. Zu der Mischung werden innerhalb von zwei Stunden 114 g (1,2 Mol) Dimethylchlorsilan zudosiert und die Mischung wird bei 70°C weitere vier Stunden gerührt. Überschüssiges Dimethylchlorsilan wird dann im Vakuum entfernt und durch Isomerisierung entstandenes 2-Propenylanisol wird über eine kurze Vigreuxkolonne abgetrennt. Es werden 204 g 3-(2-Anisyl)propyldimethylchlorsilan als klare Flüssigkeit mit einer Säurezahl von 227 erhalten.

b) Zur Alkylierung werden 122 g (0,50 Mol) des Chlorsilans, dessen Herstellung oben unter a) beschrieben ist, zu 320 ml einer 1,8-molaren Lösung von n-Octylmagnesiumchlorid in Tetrahydrofuran zugetropft und die Mischung wird weitere sechs Stunden bei Rückflußtemperatur gerührt. Zu der Mischung wird dann soviel verdünnte Salzsäure gegeben, bis zwei klare Phasen entstehen. Nach Abtrennen der Magnesiumsalzlösung wird dreimal mit je 200 ml Wasser gewaschen und das restliche Tetrahydrofuran wird entfernt. Nach Destillation im Vakuum werden 144 g 3-(2-Anisyl)propyldimethyloctylsilan mit einer Jodzahl von 80,1 und einer Säurezahl von kleiner als 1 erhalten. Das $^1$H-NMR-Spektrum zeigt ein Verhältnis von Methoxy- zu n-Octylgruppen von genau 1,0.

c) 32 g (0,10 Mol) des Tetraalkylsilans, dessen Herstellung oben unter b) beschrieben ist, werden mit 49 g (0,125 Mol) [Hydroxy-(tosyloxy)-jod]-benzol vermischt und zu der Mischung werden dann 20 ml Acetonitril und 10 g Eisessig gegeben. Nach drei Stunden Rühren bei 40°C wird die Suspension klar und es werden 150 ml Wasser und 100 ml Methylenchlorid zugegeben. Nach zweimaligem Waschen mit je 200 ml Wasser und anschließendem Einengen im Vakuum bei 40°C werden 65 g eines orangebraunen Öls, dessen $^1$H-NMR-Spektrum mit dem von [3-(3-Dimethyloctylsilylpropyl)-4-methoxyphenyl]phenyljodoniumtosylat übereinstimmt, erhalten.

d) 35 g (0,05 Mol) des Jodoniumtosylats, dessen Herstellung oben unter c) beschrieben ist, werden in 80 ml Aceton

gelöst und bei Raumtemperatur wird eine Lösung von 16 g (0,06 Mol) Natriumhexafluoroantimonat in 70 ml Aceton zugegeben. Es wird eine weitere Stunde gerührt und der Niederschlag aus Natriumtosylat wird abfiltriert. Das Filtrat wird mit Aceton gewaschen und die Lösung bei 40°C im Vakuum eingeengt. Es werden 200 ml n-Heptan zugegeben und die ölige Phase kristallisiert dann unter leichtem Rühren durch. Die fast farblosen Kristalle werden abgesaugt, mit n-Heptan gewaschen und getrocknet. Es werden 32 g [3-(3-Dimethyloctylsilylpropyl)-4-methoxyphenyl]-phenyljodoniumhexafluoroantimonat als nadeliges Kristallpulver mit einem Schmelzpunkt von 64,5°C erhalten. Gemäß dem $^1$H-NMR-Spektrum ist der Umsatz vollständig.

## Patentansprüche

**1.** Jodoniumsalze der allgemeinen Formel

$$A\text{-}J^+\text{-}B\ X^-$$

wobei A einen Rest der allgemeinen Formel

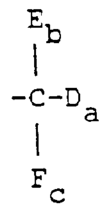

bedeutet, worin

C einen einwertigen aromatischen Kohlenwasserstoffrest mit 6 bis 14 Kohlenstoffatomen je Rest oder einen einwertigen mindestens ein Sauerstoff- und/oder Schwefelatom enthaltenden aromatischen Kohlenwasserstoffrest mit 5 bis 14 Ringatomen je Rest bedeutet,
D, E und F jeweils Substituenten von C bedeuten, wobei
D einen Rest der Formel

$$-(O)_x\text{-}(R)_y\text{-}SiR^1_3$$

E einen Rest der Formel

$$-OR^2$$

F einen Rest der Formel

$$-R^3$$

a 1, 2 oder 3,
b 0, 1 oder 2,
c 0, 1 oder 2,
x 0 oder 1,
y 0 oder 1, mit der Mäßgabe, daß die Summe aus x + y = 1 oder 2 ist,
R einen zweiwertigen aliphatischen Kohlenwasserstoffrest mit 1 bis 18 Kohlenstoffatomen je Rest, der gegebenfalls durch mindestens ein Sauerstoffatom und/oder ein Schwefelatom und/oder eine Carboxylgruppe unterbrochen ist,
$R^1$ einen einwertigen Kohlenwasserstoffrest mit 1 bis 18 Kohlenstoffatomen je Rest, der gegebenenfalls durch mindestens ein Sauerstoffatom unterbrochen ist,
$R^2$ einen einwertigen Kohlenwasserstoffrest mit 1 bis 18 Kohlenstoffatomen je Rest, der gegebenenfalls durch mindestens ein Sauerstoffatom unterbrochen ist, und
$R^3$ einen einwertigen Kohlenwasserstoffrest mit 1 bis 10 Kohlenstoffatomen je Rest, der gegebenenfalls durch mindestens ein Sauerstoffatom und/oder ein Schwefelatom unterbrochen ist, bedeutet,
B einen Rest der Formel

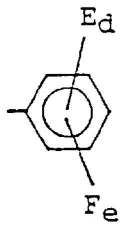

bedeutet, wobei E und F jeweils einen in 2-, 3-, 4-, 5-oder 6-Position an den Benzolring gebundenen Rest bedeutet, und die Reste E und F die oben dafür angegebene Bedeutung haben,
d 0, 1 oder 2
e 0, 1 oder 2 und
$X^-$ ein Tosylatanion oder ein schwach nukleophiles oder nicht nukleophiles Anion $Y^-$ ausgewählt aus der Gruppe von $CF_3CO_2^-$, $BF_4^-$, $PF_6^-$, $AsF_6^-$, $SbF_6^-$, $ClO_4^-$, $HSO_4^-$ und $CF_3SO_3^-$ bedeutet.

**2.** Jodoniumsalze nach Anspruch 1, dadurch gekennzeichnet, daß A einen Rest der Formel

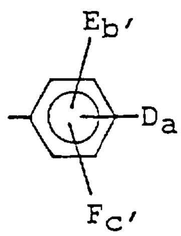

bedeutet, wobei D, E und F jeweils einen in 2-, 3-, 4-, 5- oder 6-Position an den Benzolring gebundenen Rest bedeuten,

D einen Rest der Formel

$$-(O)_x-(R)_y-SiR^1_3$$

E einen Rest der Formel

$$-OR^2$$

F einen Rest der Formel

$$-R^3$$

R einen zweiwertigen aliphatischen Kohlenwasserstoffrest mit 1 bis 18 Kohlenstoffatomen je Rest, der gegebenfalls durch mindestens ein Sauerstoffatom und/oder ein Schwefelatom und/oder eine Carboxylgruppe unterbrochen ist,
$R^1$ einen einwertigen Kohlenwasserstoffrest mit 1 bis 18 Kohlenstoffatomen je Rest, der gegebenenfalls durch mindestens ein Sauerstoffatom unterbrochen ist,
$R^2$ einen einwertigen Kohlenwasserstoffrest mit 1 bis 18 Kohlenstoffatomen je Rest, der gegebenenfalls durch mindestens ein Sauerstoffatom unterbrochen ist,
$R^3$ einen einwertigen Kohlenwasserstoffrest mit 1 bis 10 Kohlenstoffatomen je Rest, der gegebenenfalls durch mindestens ein Sauerstoffatom und/oder ein Schwefelatom unterbrochen ist,
a 1, 2 oder 3,
b' 0 oder 1,
c' 0 oder 1,
x 0 oder 1 und
y 0 oder 1 bedeutet, und mit der Maßgabe, daß die Summe aus x + y = 1 oder 2 ist.

**3.** Jodoniumsalze nach Anspruch 1 oder 2, dadurch gekennzeichnet, daß es solche der allgemeinen Formel

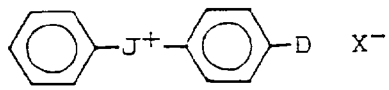

sind, wobei D ein Rest der Formel

$$-O-R-SiR^1_3$$

bedeutet, worin

R einen zweiwertigen Kohlenwasserstoffrest mit 1 bis 18 Kohlenstoffatomen je Rest, der gegebenfalls durch mindestens ein Sauerstoffatom und/oder ein Schwefelatom und/oder eine Carboxylgruppe unterbrochen ist,
$R^1$ einen einwertigen Kohlenwasserstoffrest mit 1 bis 18 Kohlenstoffatomen je Rest, der gegebenenfalls durch mindestens ein Sauerstoffatom unterbrochen ist, und
$X^-$ ein Tosylatanion oder ein schwach nukleophiles oder nicht nukleophiles Anion $Y^-$ ausgewählt aus der Gruppe von $CF_3CO_2^-$, $BF_4^-$, $PF_6^-$, $AsF_6^-$, $SbF_6^-$, $ClO_4^-$, $HSO_4^-$ und $CF_3SO_3^-$ bedeutet.

**4.** Jodoniumsalze nach Anspruch 1, 2 oder 3, dadurch gekennzeichnet, daß es solches der Formel

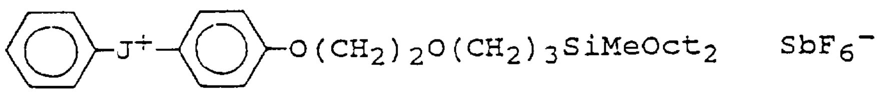

ist, wobei Me einen Methylrest und Oct einen n-Octylrest bedeutet.

**5.** Verfahren zur Herstellung der Jodoniumsalze nach einem der Ansprüche 1 bis 4, dadurch gekennzeichnet, daß in einer 1. Stufe
ein Silan der Formel

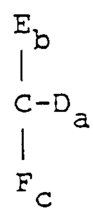

,

worin C einen einwertigen aromatischen Kohlenwasserstoffrest mit 6 bis 14 Kohlenstoffatomen je Rest oder einen einwertigen mindestens ein Sauerstoff- und/oder Schwefelatom enthaltenden aromatischen Kohlenwasserstoffrest mit 5 bis 14 Ringatomen je Rest bedeutet,
D, E und F jeweils Substituenten von C bedeuten, wobei
D einen Rest der Formel

$$-(O)_x-(R)_y-SiR^1_3$$

E einen Rest der Formel

$$-OR^2$$

F einen Rest der Formel

$$-R^3,$$

a 1, 2 oder 3
b 0, 1 oder 2,
c 0, 1 oder 2,
x 0 oder 1,
y 0 oder 1, mit der Maßgabe, daß die Summe aus x + y = 1 oder 2 ist,
R einen zweiwertigen aliphatischen Kohlenwasserstoffrest mit 1 bis 18 Kohlenstoffatomen je Rest, der gegebenfalls durch mindestens ein Sauerstoffatom und/oder ein Schwefelatom und/oder eine Carboxylgruppe unterbrochen ist,

$R^1$ einen einwertigen Kohlenwasserstoffrest mit 1 bis 18 Kohlenstoffatomen je Rest, der gegebenenfalls durch mindestens ein Sauerstoffatom unterbrochen ist,
$R^2$ einen einwertigen Kohlenwasserstoffrest mit 1 bis 18 Kohlenstoffatomen je Rest, der gegebenenfalls durch mindestens ein Sauerstoffatom unterbrochen ist, und
$R^3$ einen einwertigen Kohlenwasserstoffrest mit 1 bis 10 Kohlenstoffatomen je Rest, der gegebenenfalls durch mindestens ein Sauerstoffatom und/oder ein Schwefelatom unterbrochen ist, bedeutet, mit gegebenenfalls am Benzolring substituiertem [Hydroxy-(tosyloxy)-jod]-benzol der Formel

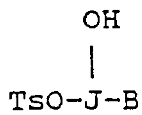

wobei Ts0 einen Tosyloxyrest und
B einen Rest der Formel

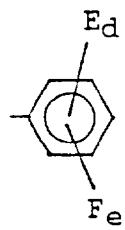

bedeutet, wobei E und F jeweils einen in 2-, 3-, 4-, 5-oder 6-Position an den Benzolring gebundenen Rest bedeutet, und die Reste E und F die oben dafür angegebene Bedeutung haben,
d 0, 1 oder 2 und
e 0, 1 oder 2 bedeutet,

in Gegenwart von Säuren und gegebenenfalls polarem Lösungsmittel zu einem Jodoniumtosylat der Formel

$$A\text{-}J^+\text{-}B\ TsO^-$$

umgesetzt wird, wobei $TSO^-$ ein Tosylatanion und A einen Rest der Formel

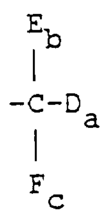

bedeutet und B, C, D, E, F, a, b und c die oben dafür angegebene Bedeutung haben, und gegebenenfalls in einer 2. Stufe

das so erhaltene Jodoniumtosylat mit einem Alkalimetallsalz der Formel

$$M^+Y^-,$$

wobei $M^+$ ein Alkalikation und
$Y^-$ ein schwach nukleophiles oder nicht nukleophiles Anion ausgewählt aus der Gruppe von $CF_3CO_2^-$, $BF_4^-$, $PF_6^-$, $AsF_6^-$, $SbF_6^-$, $ClO_4^-$, $HSO_4^-$ und $CF_3SO_3^-$ bedeutet,

in Gegenwart von organischem Lösungsmittel umgesetzt wird.

**6.** Verfahren nach Anspruch 5, dadurch gekennzeichnet, daß $Y^-$ ein Anion der Formel $SbF_6^-$ bedeutet.

## Claims

**1.** Iodonium salts of the general formula

$$A\text{-}J^{+}\text{-}B\ X^{-}$$

where A is a radical of the general formula

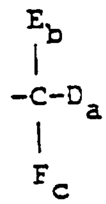

in which

C is a monovalent aromatic hydrocarbon radical having from 6 to 14 carbon atoms per radical or a monovalent aromatic hydrocarbon radical containing at least one oxygen and/or sulphur atom and having from 5 to 14 ring atoms per radical,
D, E and F are each substituents of C, where
D is a radical of the formula

$$-(O)_x\text{-}(R)_y\text{-}SiR^1_3,$$

E is a radical of the formula

$$-OR^2,$$

F is a radical of the formula

$$-R^3,$$

a is 1, 2 or 3,
b is 0, 1 or 2,
c is 0, 1 or 2,
x is 0 or 1,
y is 0 or 1, with the proviso that the sum of x + y = 1 or 2,
R is a divalent aliphatic hydrocarbon radical having from 1 to 18 carbon atoms per radical, which is uninterrupted or interrupted by at least one oxygen atom and/or one sulphur atom and/or one carboxyl group,
$R^1$ is a monovalent hydrocarbon radical having from 1 to 18 carbon atoms per radical, which is uninterrupted or interrupted by at least one oxygen atom,
$R^2$ is a monovalent hydrocarbon radical having from 1 to 18 carbon atoms per radical, which is uninterrupted or interrupted by at least one oxygen atom, and
$R^3$ is a monovalent hydrocarbon radical having from 1 to 10 carbon atoms per radical, which is uninterrupted or interrupted by at least one oxygen atom and/or one sulphur atom,
B is a radical of the formula

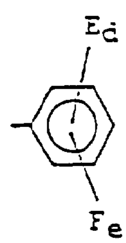

where E and F are each a radical bound to the benzene ring in the 2-, 3-, 4-, 5- or 6-position, and the radicals E and F have the meaning specified for them above,
d is 0, 1 or 2,
e is 0, 1 or 2 and
$X^-$ is a tosylate anion or a weakly nucleophilic or non-nucleophilic anion $Y^-$ selected from the group consisting of $CF_3CO_2^-$, $BF_4^-$, $PF_6^-$, $AsF_6^-$, $SbF_6^-$, $ClO_4^-$, $HSO_4^-$ and $CF_3SO_3^-$.

**2.** Iodonium salts according to Claim 1, characterized in that A is a radical of the formula

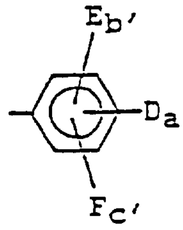

where D, E and F are each a radical bound to the benzene ring in the 2-, 3-, 4-, 5- or 6-position,
D is a radical of the formula

$$-(O)_x-(R)_y-SiR^1_3,$$

E is a radical of the formula

$$-OR^2,$$

F is a radical of the formula

$$-R^3,$$

R is a divalent aliphatic hydrocarbon radical having from 1 to 18 carbon atoms per radical, which is uninterrupted or interrupted by at least one oxygen atom and/or one sulphur atom and/or one carboxyl group,
$R^1$ is a monovalent hydrocarbon radical having from 1 to 18 carbon atoms per radical, which is uninterrupted or interrupted by at least one oxygen atom,
$R^2$ is a monovalent hydrocarbon radical having from 1 to 18 carbon atoms per radical, which is uninterrupted or interrupted by at least one oxygen atom,
$R^3$ is a monovalent hydrocarbon radical having from 1 to 10 carbon atoms per radical, which is uninterrupted or interrupted by at least one oxygen atom and/or one sulphur atom,
a is 1, 2 or 3,
b' is 0 or 1,
c' is 0 or 1,
x is 0 or 1 and
y is 0 or 1, and with the proviso that the sum of x + y = 1 or 2.

**3.** Iodonium salts according to Claim 1 or 2, which have the general formula

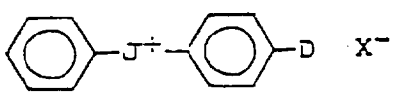

where D is a radical of the formula

$$-O-R-SiR^1_3$$

in which

R is a divalent hydrocarbon radical having from 1 to 18 carbon atoms per radical, which is uninterrupted or interrupted by at least one oxygen atom and/or one sulphur atom and/or one carboxyl group,
$R^1$ is a monovalent hydrocarbon radical having from 1 to 18 carbon atoms per radical, which is uninterrupted or interrupted by at least one oxygen atom, and
$X^-$ is a tosylate anion or a weakly nucleophilic or non-nucleophilic anion $Y^-$ selected from the group consisting of $CF_3CO_2^-$, $BF_4^-$, $PF_6^-$, $AsF_6^-$, $SbF_6^-$, $ClO_4^-$, $HSO_4^-$ and $CF_3SO_3^-$.

**4.** Iodonium salts according to Claim 1, 2 or 3, which have the formula

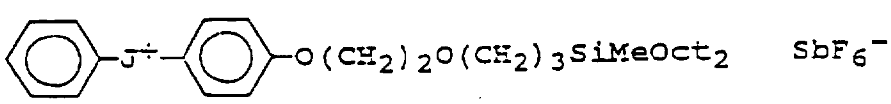

where Me is a methyl radical and Oct is an n-octyl radical.

**5.** Process for preparing the iodonium salts according to one of Claims 1 to 4, characterized in that, in a 1st stage, a silane of the formula

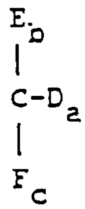

in which C is a monovalent aromatic hydrocarbon radical having from 6 to 14 carbon atoms per radical or a monovalent aromatic hydrocarbon radical containing at least one oxygen and/or sulphur atom and having from 5 to 14 ring atoms per radical,

D, E and F are each substituents of C, where
D is a radical of the formula

$$-(O)_x-(R)_y-SiR^1_3,$$

E is a radical of the formula

$$-OR^2,$$

F is a radical of the formula

$$-R^3,$$

a is 1, 2 or 3,
b is 0, 1 or 2,
c is 0, 1 or 2,
x is 0 or 1,
y is 0 or 1, with the proviso that the sum of x + y = 1 or 2,
R is a divalent aliphatic hydrocarbon radical having from 1 to 18 carbon atoms per radical, which is uninterrupted or interrupted by at least one oxygen atom and/or one sulphur atom and/or one carboxyl group,
$R^1$ is a monovalent hydrocarbon radical having from 1 to 18 carbon atoms per radical, which is uninterrupted or interrupted by at least one oxygen atom,
$R^2$ is a monovalent hydrocarbon radical having from 1 to 18 carbon atoms per radical, which is uninterrupted or interrupted by at least one oxygen atom, and
$R^3$ is a monovalent hydrocarbon radical having from 1 to 10 carbon atoms per radical, which is uninterrupted or interrupted by at least one oxygen atom and/or one sulphur atom,

is reacted with [hydroxy(tosyloxy)iodo]benzene, the benzene ring of which may be unsubstituted or substituted, of the formula

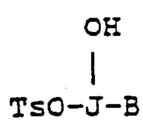

where TsO is a tosyloxy radical and

B is a radical of the formula

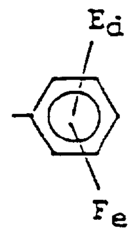

where E and F are each a radical bound to the benzene ring in the 2-, 3-, 4-, 5- or 6-position, and the radicals E and F have the meaning specified for them above,
d is 0, 1 or 2 and
e is 0, 1 or 2,
in the presence of acids and in the presence or absence of a polar solvent to give an iodonium tosylate of the formula

$$A\text{-}J^{+}\text{-}B\ TsO^{-}$$

where $TsO^-$ is a tosylate anion and A is a radical of the formula

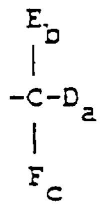

and B, C, D, E, F, a, b and c have the meanings specified for them above, and, if desired, in a 2nd stage, the iodonium tosylate thus obtained is reacted with an alkali metal salt of the formula

$$M^{+}Y^{-}$$

where $M^+$ is an alkali metal cation and
$Y^-$ is a weakly nucleophilic or non-nucleophilic anion selected from the group consisting of $CF_3CO_2^-$, $BF_4^-$, $PF_6^-$, $AsF_6^-$, $SbF_6^-$, $ClO_4^-$, $HSO_4^-$ and $CF_3SO_3^-$, in the presence of an organic solvent.

**6.** Process according to Claim 5, characterized in that $Y^-$ is an anion of the formula $SbF_6^-$.

**Revendications**

**1.** Sels d'iodonium de formule générale :

$$A\text{-}I^{+}\text{-}B\ X^{-}$$

où

A représente un radical de formule générale

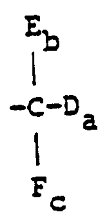

dans lequel
C représente un radical hydrocarbure aromatique monovalent de 6 à 14 atomes de carbone par radical ou un radical hydrocarbure aromatique monovalent contenant au moins un atome d'oxygène et/ou de soufre de 5 à 14 atomes cycliques par radical,
D, E et F représentent chacun un substituant de C, où
D représente un radical de formule

$$-(O)_x-(R)_y-SiR^1_3$$

E représente un radical de formule

$$-OR^2$$

F représente un radical de formule

$$-R^3$$

a représente 1, 2 ou 3,
b représente 0, 1 ou 2,
c représente 0, 1 ou 2,
x représente 0 ou 1,
y représente 0 ou 1, avec la condition que la somme x + y est égale à 1 ou 2,
R représente un radical hydrocarbure aliphatique bivalent avec 1 à 18 atomes de carbone par radical, qui est facultativement interrompu par au moins un atome d'oxygène et/ou un atome de soufre et/ou un groupe carboxyle,
$R^1$ représente un radical hydrocarbure monovalent avec 1 à 18 atomes de carbone par radical, qui est facultativement interrompu par au moins un atome d'oxygène,
$R^2$ représente un radical hydrocarbure monovalent avec 1 à 18 atomes de carbone par radical, qui est facultativement interrompu par au moins un atome d'oxygène, et
$R^3$ représente un radical hydrocarbure monovalent avec 1 à 10 atomes de carbone par radical, qui est facultativement interrompu par au moins un atome d'oxygène et/ou un atome de soufre,
B représente un radical de formule

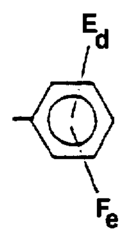

où
E et F représentent chacun un radical lié en position 2, 3, 4, 5 ou 6 au cycle benzène et les radicaux E et F ont la signification donnée précédemment;
d représente 0, 1 ou 2
e représente 0, 1 ou 2 et
$X^-$ représente un anion tosylate ou un anion $Y^-$ faiblement nucléophile ou non nucléophile, choisi dans le groupe de $CF_3CO_2^-$, $BF_4^-$, $PF_6^-$, $AsF_6^-$, $SbF_6^-$, $ClO_4^-$, $HSO_4^-$ et $CF_3SO_3^-$.

**2.** Sels d'iodonium suivant la revendication 1, caractérisés en ce que A représente un radical de formule

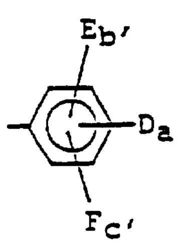

où

D, E et F représentent chacun un radical lié en position 2, 3, 4, 5 ou 6 au cycle benzène,
D représente un radical de formule

$$-(O)_x-(R)_y-SiR^1_3$$

E représente un radical de formule

$$-OR^2$$

F représente un radical de formule

$$-R^3$$

R représente un radical hydrocarbure aliphatique bivalent avec 1 à 18 atomes de carbone par radical, qui est facultativement interrompu par au moins un atome d'oxygène et/ou un atome de soufre et/ou un groupe carboxyle,
$R^1$ représente un radical hydrocarbure monovalent avec 1 à 18 atomes de carbone par radical, qui est facultativement interrompu par au moins un atome d'oxygène,
$R^2$ représente un radical hydrocarbure monovalent avec 1 à 18 atomes de carbone par radical, qui est facultativement interrompu par au moins un atome d'oxygène,
$R^3$ représente un radical hydrocarbure monovalent avec 1 à 10 atomes de carbone par radical, qui est facultativement interrompu par au moins un atome d'oxygène et/ou un atome de soufre,
a représente 1, 2 ou 3,
b' représente 0 ou 1,
c' représente 0 ou 1,
x représente 0 ou 1 et
y représente 0 ou 1, avec la condition que la somme x + y est égale à 1 ou 2.

**3.** Sels d'iodonium suivant la revendication 1 ou 2, caractérisé en ce qu'ils sont de formule générale

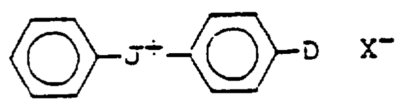

où D représente un radical de formule

$$-O-R-SiR^1_3$$

où

R représente un radical hydrocarbure bivalent avec 1 à 18 atomes de carbone par radical, qui est facultativement interrompu par au moins un atome d'oxygène et/ou un atome de soufre et/ou un groupe carboxyle,
$R^1$ représente un radical hydrocarbure monovalent avec 1 à 18 atomes de carbone par radical, qui est facultativement interrompu par au moins un atome d'oxygène,
$X^-$ représente un anion tosylate ou un anion $Y^-$ faiblement nucléophile ou non nucléophile, choisi dans le groupe de $CF_3CO_2^-$, $BF_4^-$, $PF_6^-$, $AsF_6^-$, $SbF_6^-$, $ClO_4^-$, $HSO_4^-$ et $CF_3SO_3^-$.

**4.** Sels d'iodonium suivant la revendication 1, 2 ou 3, caractérisé en ce qu'ils sont de formule

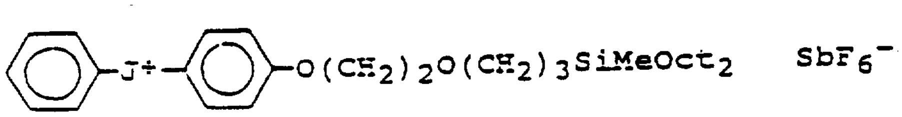

où Me représente un radical méthyle et Oct, un radical n-octyle.

**5.** Procédé de préparation de sels d'iodonium suivant l'une quelconque des revendications 1 à 4, caractérisé en ce que dans une première étape
un silane de formule

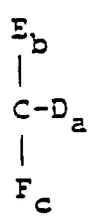

dans lequel

C représente un radical hydrocarbure aromatique monovalent de 6 à 14 atomes de carbone par radical ou un radical hydrocarbure aromatique monovalent contenant au moins un atome d'oxygène et/ou de soufre de 5 à 14 atomes cycliques par radical,
D, E et F représentent chacun un substituant de C, où

D représente un radical de formule

$$-(O)_x-(R)_ySiR^1_3$$

E représente un radical de formule

$$-OR^2$$

F représente un radical de formule

$$-R^3$$

a représente 1, 2 ou 3,
b représente 0, 1 ou 2,
c représente 0, 1 ou 2,
x représente 0 ou 1,
y représente 0 ou 1, avec la condition que la somme x + y est égale à 1 ou 2,
R représente un radical hydrocarbure aliphatique bivalent avec 1 à 18 atomes de carbone par radical, qui est facultativement interrompu par au moins un atome d'oxygène et/ou un atome de soufre et/ou un groupe carboxyle,
$R^1$ représente un radical hydrocarbure monovalent avec 1 à 18 atomes de carbone par radical, qui est facultativement interrompu par au moins un atome d'oxygène,
$R^2$ représente un radical hydrocarbure monovalent avec 1 à 18 atomes de carbone par radical, qui est facultativement interrompu par au moins un atome d'oxygène, et
$R^3$ représente un radical hydrocarbure monovalent avec 1 à 10 atomes de carbone par radical, qui est facultativement interrompu par au moins un atome d'oxygène et/ou un atome de soufre,

est mis à réagir avec un hydroxy(tosyloxy)iodobenzène facultativement substitué sur le cycle benzène, de formule

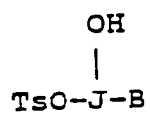

où

TsO représente un radical tosyloxy et
B représente un radical de formule

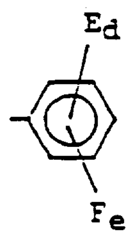

où
E et F représentent chacun un radical lié en position 2, 3, 4, 5 ou 6 au cycle benzène et les radicaux E et F ont la signification donnée précédemment,
d représente 0, 1 ou 2,
e représente 0, 1 ou 2, en présence d'un acide et facultativement, d'un solvant polaire, pour donner un tosylate d'iodonium de formule

$$A\text{-}I^+\text{-}B\ TsO^-$$

où
$TsO^-$ représente un anion tosylate et
A représente un radical de formule

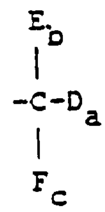

et B, C, D, E, F, a, b et c ont la signification donnée précédemment, et facultativement

dans une deuxième étape
le tosylate d'iodonium ainsi obtenu est mis à réagir avec un sel de métal alcalin de formule

$$M^+Y^-$$

où

$M^+$ représente un cation alcalin et
$Y^-$ représente un anion faiblement nucléophile ou non nucléophile, choisi dans le groupe de $CF_3CO_2^-$, $BF_4^-$, $PF_6^-$, $AsF_6^-$, $SbF_6^-$, $ClO_4^-$, $HSO_4^-$ et $CF_3SO_3^-$,
en présence d'un solvant organique.

**6.** Procédé suivant la revendication 5, caractérisé en ce que $Y^-$ représente un anion de formule $SbF_6^-$.